# FASCICULE DE BREVET EUROPEEN

(11) **EP 2 083 408 B1**
(45) Date de publication et mention de la délivrance du brevet: **11.07.2012**
(21) Numéro de dépôt: 09151252.5
(22) Date de dépôt: 23.01.2009
(51) Int. Cl.: G08C 23/04, G08C 19/28, H04L 25/493

(54) **Procédé de communication d'informations par rayons infrarouges entre un émetteur et un récepteur dans un réseau domotique**
Informationsübertragungsverfahren über Infrarotstrahlen zwischen einem Sender und einem Empfänger in einem Heimnetz
Method for communicating information by infrared rays between a transmitter and a receiver in a home automation network

(30) Priorité: 25.01.2008 US 20026
(43) Date de publication de la demande: 29.07.2009
(73) Titulaire: Somfy SAS, 74300 Cluses (FR)
(72) Inventeur: Cheron, Eric, 74460, TANINGES (FR); Baran, Vyacheslav, Poway, CA 92064 (US); Rodas, Herbert, Encinitas, CA 92024 (US); Valoteau, Francis, San Diego, CA 92103 (US)
(74) Mandataire: Bugnion Genève

(56) Documents cités:
- EP-A1- 1 333 706
- WO-A2-03/030581
- US-A- 5 684 871

## Description

L'invention se rapporte au domaine de la télécommande infrarouge d'installations motorisées pour produits de protection solaire et d'occultation dans un bâtiment.

Ceux-ci sont disposés le plus souvent à l'intérieur du bâtiment (habitation, bâtiment commercial...) et comprennent un actionneur électromécanique permettant leur contrôle à distance par l'utilisateur ou leur contrôle automatique.

Les commandes à distance sont réalisées au moyen d'émetteurs et récepteurs de type infrarouge (IR), au moyen de trames de communication comprenant notamment le code des opérations ou commandes à exécuter, suite notamment à un appui sur une touche d'un clavier de commande.

Dans d'anciennes générations de produits, principalement alimentés sur le réseau commercial de courant alternatif, les trames émises ne comportaient pas de préambule, ou encore comportaient un préambule très simple, de type « start-bit » identique aux autres signaux de données, permettant en particulier la synchronisation rapide du récepteur IR, celui-ci étant alimenté en permanence et donc toujours à l'écoute de tout nouveau signal.

Cette situation a évolué avec l'apparition de produits autonomes, en particulier alimentés par des piles primaires. Dans ces conditions, le récepteur IR est principalement en mode sommeil et n'est activé que pendant de brefs intervalles de temps pour constater s'il existe un signal, ou encore le récepteur comprend deux moyens de réception : un premier moyen de réception à très basse consommation, alimenté en permanence, susceptible de faire la discrimination d'un signal simple particulier et de réveiller un deuxième moyen de réception à plus forte consommation, capable de démoduler un signal complexe contenant les données. Le brevet EP 1 333 706 décrit un tel dispositif.

Ce type de récepteur « autonome » nécessite que la trame de l'émetteur comprenne un préambule long, par exemple une succession de 10 ou 12 impulsions présentant une fréquence de 1 KHz et précédant immédiatement le bloc de données. Les signaux de données présentent un format différent selon qu'il s'agit d'un bit 0 ou d'un bit 1, tous deux étant néanmoins transmis sous forme d'impulsions modulées à 38 KHz.

Un premier problème rencontré est que ce type d'émetteur avec préambule long à impulsions simples 1 KHz ne peut être compris par un récepteur d'ancienne génération.

Un deuxième problème rencontré est que la trame émise par ce type d'émetteur avec préambule long à impulsions simples 1 KHz ne peut pas être apprise et correctement restituée par une télécommande infrarouge dite « universelle ». En effet, ces télécommandes comprennent un étage de réception IR et un étage d'émission IR qui sont le plus souvent constitués d'éléments standards d'amplification de démodulation de signaux de fréquence donnée, en général 38 KHz. Un signal de préambule constitué d'impulsions simples à 1 KHz ne peut donc pas être appris ou restitué par une telle télécommande.

Si le préambule devient lui-même modulé à 38 KHz, de manière à pouvoir être appris et restitué par une télécommande universelle, la compatibilité avec les récepteurs d'ancienne génération n'est cependant pas complètement assurée : il existe en effet un risque d'interprétation erronée de signaux du préambule comme signaux de données.

Les derniers signaux du préambule, modulés à 38 KHz peuvent en effet être interprétés à tort comme premiers signaux de données, et ceci même dans le cas où les formats de signaux de données et de signaux de préambule sont différents.

Le brevet US 5,640,160 décrit de tels formats de transmission. Dans ce brevet, les données sont différenciées par une méthode de modulation en position : chaque impulsion présente une même durée t et est suivie d'un état de repos de durée t, ou 2t, ou 3t selon qu'il s'agit de transmettre un état 0, un état 1 ou un préambule.

Dans ce brevet cependant, le préambule comprend une seule impulsion (modulée à 38 KHz comme le sont les impulsions de données). Ce type de préambule ne suffit donc pas à permettre le réveil d'un récepteur autonome.

Le brevet US 5 684 871 décrit une méthode de modulation en position dans laquelle les impulsions utilisées pour la synchronisation et les données ont la même durée.

Le but de l'invention est de fournir un procédé de communication par rayons infrarouges remédiant à ces inconvénients et améliorant les procédés de communication connus de l'art antérieur. En particulier, l'invention permet une compatibilité descendante entre les nouvelles télécommandes des nouveaux récepteurs (autonomes) et les anciens récepteurs (non autonomes). En particulier, le procédé permet d'éviter que des impulsions d'un signal de préambule soient interprétées comme des données. Il permet en outre d'éviter que les premières données d'un signal de données ne soient pas reçues par le récepteur.

Différents modes d'exécution du procédé sont définis par les revendications 2 à 5.

Selon l'invention, l'émetteur d'ordres de commande est défini par la revendication 6.

Selon l'invention, l'installation domotique est définie par la revendication 7.

Différents modes de réalisation de l'installation sont définis par les revendications 8 à 10.

Le dessin annexé représente, à titre d'exemple, un mode de réalisation d'une installation utilisant un procédé de communication selon l'invention et un exemple d'une trame d'un signal de communication utilisé dans un tel procédé de communication.

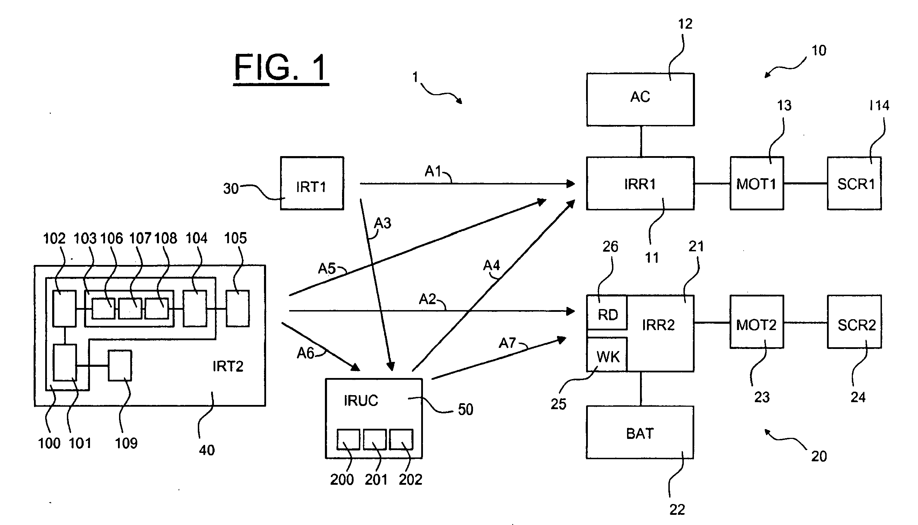

La figure 1 est un schéma d'un mode de réalisation d'une installation selon l'invention.

La figure 2 est un schéma représentant un exemple de structure de la trame d'un signal de communication utilisé dans un mode d'exécution du procédé de communication selon l'invention.

L'installation 1 comprend un premier produit motorisé de couverture de fenêtre 10, comprenant un premier récepteur infrarouge simple 11 (également référencé IRR1), un premier bloc d'alimentation 12 (également référencé AC) branché sur le secteur alternatif raccordé au récepteur, un premier moteur électrique 13 (également référencé MOT1) alimenté par le récepteur et entraînant mécaniquement un premier écran de fenêtre 14 (également référencé SCR1) tel qu'un store vénitien.

Le récepteur simple IRR1 est de type alimenté en permanence, donc ne nécessitant pas de préambule répétitif pour provoquer le réveil. Il comprend un circuit d'amplification et démodulation de signaux 38 KHz.

L'installation comprend également un deuxième produit motorisé de couverture de fenêtre 20, comprenant un deuxième récepteur infrarouge double 21 (également référencé IRR2), un deuxième bloc d'alimentation 22 (également référencé BAT) branché cette fois sur une batterie primaire et raccordé au récepteur, un deuxième moteur électrique 23 (également référencé MOT2) alimenté par le récepteur et entraînant mécaniquement un deuxième écran de fenêtre 24 (également référencé SCR2) tel qu'un store vénitien.

Le récepteur double IRR2 est de type autonome, nécessitant que les trames de communication comprennent un préambule répétitif pour provoquer le réveil. Il comprend un premier circuit 25 de réception et reconnaissance d'impulsions 1 KHz (ou circuit de réveil, référencé WK) et un deuxième circuit 26 de réception, amplification et démodulation de signaux 38 KHz, (référencé RD), ce circuit étant placé en mode sommeil et réveillé par le premier circuit WK quand une ou plusieurs impulsions 1 KHz sont détectées.

L'installation comprend également un premier transmetteur infrarouge 30 (également référencé IRT1) susceptible d'émettre une trame de données modulées en position, comme décrit dans l'art antérieur, cette trame comprenant éventuellement un préambule court formé par une ou deux impulsions de préambule. Toutes les impulsions sont modulées à la fréquence de 38 KHz.

Ainsi, la commande directe du premier récepteur IRR1 par le premier transmetteur IRT1 est possible, comme représenté par la flèche A1.

L'installation comprend également un deuxième transmetteur infrarouge 40 (également référencé IRT2) susceptible d'émettre une trame de données modulées en position, comme pour le premier transmetteur, cette trame comprenant un préambule périodique long formé par une dizaine d'impulsions de préambule. Les impulsions de préambule ont une fréquence de répétition de 1 KHz.

Ainsi, la commande directe du récepteur double IRR2 par le deuxième transmetteur IRT2 est possible, comme représenté par la flèche A2, puisque le préambule périodique long est détecté par le circuit de réveil.

Toutes ces impulsions de préambule sont modulées à la fréquence de 38 KHz, afin de permettre également l'apprentissage et la répétition par une télécommande universelle comme cela sera vu plus loin.

Le deuxième transmetteur infrarouge comprend des moyens lui permettant de fonctionner conformément au procédé de communication objet de l'invention. Ainsi, il comprend des moyens 101 pour définir un ordre de commande ou une information à émettre par un signal infrarouge, des moyens 102 pour traduire cet ordre de commande ou cette information en un code, des moyens 103 pour, à partir de ce code, déterminer la trame du signal à émettre, des moyens 104 de modulation du signal et des moyens 105 d'émission du signal infrarouge. Notamment, les moyens pour déterminer la trame du signal à émettre à partir du code comprennent des moyens 106 pour définir la trame d'un signal de préambule constitué par la répétition d'impulsions, des moyens 107 pour définir la trame d'un signal de données et des moyens 108 pour intercaler entre ces deux trames une période sans signal d'une durée déterminée.

L'ensemble des moyens évoqués dans le paragraphe précédent à l'exception des moyens d'émission peuvent être regroupés dans une unité logique de traitement 100 du deuxième transmetteur. Ces moyens peuvent consister en des moyens logiciels, tels que des programmes informatiques. Une interface homme-machine 109 comprenant un clavier de commande et/ou des moyens d'affichage est raccordée à l'unité logique de traitement.

L'installation comprend aussi une télécommande universelle 50 (également référencée IRUC) munie de moyens connus de réception IR 200, de mémorisation 201 et d'émission IR 202. Traditionnellement, cette télécommande universelle est susceptible d'enregistrer des trames de tous types, pourvu que les signaux compris dans ces trames soient modulés en 38 KHz. De ce fait, la télécommande universelle peut recevoir et restituer des signaux fournis par le premier transmetteur et destinés à commander le premier récepteur (flèches A3 et A4).

Les transmetteurs et la télécommande universelle contiennent des touches de commande, non représentées.

Les impulsions de préambule d'un signal en provenance du deuxième transmetteur étant modulées à la fréquence de 38 KHz, la télécommande universelle peut également recevoir et restituer des signaux en provenance du deuxième transmetteur (flèches A6 et A7).

Du fait de l'invention et du format de trame décrit plus bas, le deuxième transmetteur IRT2 peut également commander le premier récepteur IRR1, ce qui assure une compatibilité descendante entre équipements, puisque les deuxièmes transmetteur et récepteur, ce dernier étant autonome, sont de type plus récent que les premiers émetteur et récepteur, ce dernier étant alimenté sur le secteur. Cette possibilité est représentée par la flèche A5. Seul un ancien transmetteur (IRT1) destiné à un système non autonome ne peut pas commander un nouveau récepteur (IRR2).

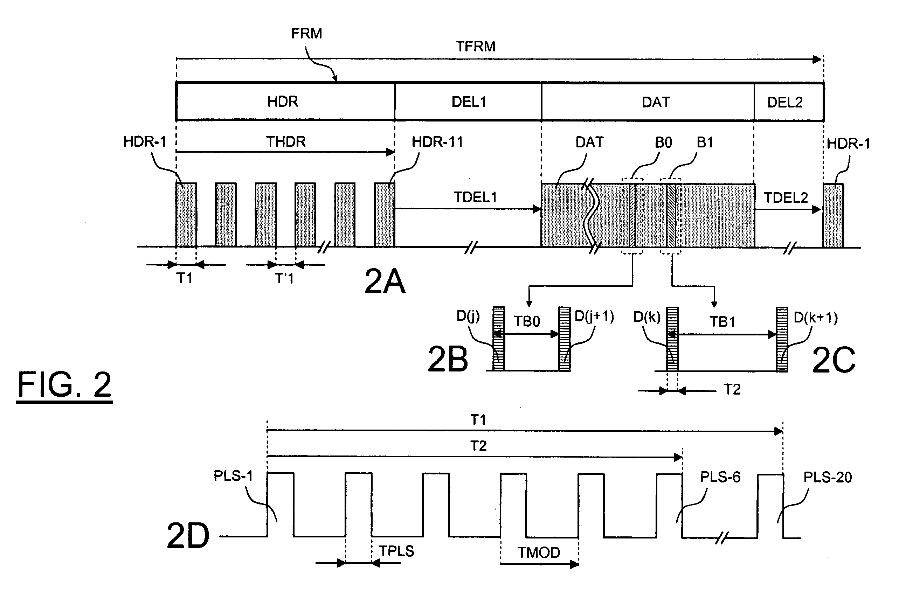

La figure 2 décrit le format de trame émis par le deuxième transmetteur IRT2 et compris par le deuxième récepteur IRR2.

Une première partie 2A de la figure 2 décrit la totalité d'une trame FRM, jusqu'à l'apparition du début de la trame suivante.

La trame FRM comprend 4 éléments :
- un préambule long et périodique HDR (Header),
- un premier silence ou délai ou période sans signal DEL1 de durée longue et fixe,
- un ensemble de données DAT de longueur variable,
- un deuxième silence ou délai ou période sans signal DEL2 de durée variable.

La trame FRM présente une durée TFRM, préférentiellement égale à 121 ms ± 5%. Quand une touche d'un clavier de commande du transmetteur IRT2 est pressée, la même trame est répétée tant que la touche est activée et l'ensemble de données DAT comprend au moins un message binaire incluant l'identité du transmetteur IRT2, ou alternativement un code de groupe, et le code de la touche activée, ou alternativement le code d'une commande à exécuter résultant de l'appui sur la touche ou de l'appui sur une combinaison de touches.

Le préambule HDR est de type long et périodique, constitué préférentiellement de 11 impulsions identiques, dites impulsions de premier type et référencées HDR-1 à HDR-11, l'ensemble ayant une durée THDR préférentiellement égale à 10.5 ms ± 5%. Cette durée totale résulte du format particulier de chaque impulsion de premier type, la durée T1 d'une impulsion de premier type étant 0.5 ms, suivie d'une durée identique T'1 ce qui donne une période de 1 ms (soit une fréquence de 1 KHz) pour le signal de préambule.

L'ensemble de données DAT comprend une succession de bits B0 à l'état 0 et de bits B1 à l'état 1, la différenciation entre bits ayant lieu par modulation de position comme décrit dans l'art antérieur. La modulation de position a lieu entre impulsions de deuxième type. Ces impulsions de deuxième type ont une durée commune T2, de préférence égale à 140 µs ± 5%.

On a représenté par exemple un bit B0 dans la partie 2B de la figure 2. Une première impulsion de deuxième type D(j) est séparée d'une impulsion suivante D(j+1) par une durée TB0 représentative d'un bit B0. Préférentiellement, cette durée est égale à 5 ms (incluant la durée T2 d'une impulsion).

On a représenté par exemple un bit B1 dans la partie 2C de la figure 2. Une troisième impulsion de deuxième type D(k) est séparée d'une impulsion suivante D(k+1) par une durée TB1 représentative d'un bit B1. Préférentiellement, cette durée est égale à 7.5 ms (incluant la durée T2 d'une impulsion).

Contrairement à ce qui est décrit dans le brevet EP 1 333 706, à la fois les impulsions de premier type et les impulsions de deuxième type sont modulées à une même fréquence FMOD, comme représenté dans la partie 2D de la figure 2.

La période de modulation TMOD est préférentiellement égale à 26.3 µs ±5%, ce qui correspond à une fréquence FMOD égale à 38 KHz pour laquelle il existe des composants standard d'amplification et démodulation de porteuse (comprenant aussi la démodulation de position), par exemple le circuit référencé TSOP2138.

La discrimination entre impulsions du premier type et impulsions du deuxième type pourrait donc se faire uniquement par analyse comparée des durées T1 et T2, mais cela supposerait une logique complexe alors que le circuit de réveil WK doit avoir la structure la plus simple possible de manière à minimiser sa consommation.

Dans le cas le plus simple, le réveil du circuit de réception de données RD peut être provoqué par la détection et vérification d'une seule période (T1+T'1) de préambule. S'il s'agit par exemple de l'avant dernière période de préambule (HDR-10), alors la dernière période de préambule peut être interprétée comme étant un premier bit de données. En effet, le temps total T3 de traitement des impulsions de préambule de réveil du deuxième circuit RD peut être tel que ce circuit devient actif pendant la dernière impulsion HDR-11 et que celle-ci présente une durée apparente voisine de la durée commune T2 : la dernière impulsion de préambule est alors prise pour une impulsion de deuxième type. On aura la même situation si l'impulsion de préambule détectée comme ayant le bon format est une impulsion précédente (par exemple HDR-9) mais avec un temps total T3 plus important.

Pour éviter une telle situation avec une marge de sécurité suffisante et conformément à l'invention, le préambule est suivi par un premier délai DEL1, silence sans émission, dont la durée TDEL1 est supérieure à deux fois la plus grande valeur :
- de la durée totale T3 de traitement des impulsions de préambule et de réveil du deuxième circuit RD chargé de recevoir, amplifier et traiter les données de l'ensemble de données DAT,
- de la durée nominale TB1 correspondant à la plus longue modulation de position dans l'ensemble de données DAT, c'est-à-dire la durée séparant deux début d'impulsions successives D(k), D(k+1).

Préférentiellement, la durée TDEL1 du premier délai est égale à 18 ms ± 5%, soit un rapport TDEL1/TB1 très sensiblement supérieur à 2 (égal à 2.4, soit une marge complémentaire de 20%).

Bien que rallongeant la durée totale d'une trame, ce choix garantit qu'un préambule périodique long sera correctement interprété sans interférence entre préambule et ensemble de données.

Avec un tel format de trame, un deuxième transmetteur peut non seulement commander un deuxième récepteur mais aussi un premier récepteur. De plus, le deuxième transmetteur peut être utilisé pour permettre à une télécommande universelle d'apprendre à commander un deuxième récepteur ou encore un premier récepteur.

## Revendications

1. Procédé de communication d'informations par rayonnement infrarouge entre un émetteur (40) d'ordres de commande d'un produit (20) motorisé de fermeture, d'occultation ou de protection solaire dans un bâtiment et un récepteur (21 ; 11) d'ordres de commande, comprenant l'émission d'une trame de communication incluant :
- un signal de préambule (HDR) consistant en la répétition d'impulsions d'un premier type, une impulsion de premier type présentant une première durée, et
- un signal de données (DAT), les données étant traduites sous la forme d'impulsions d'un deuxième type, une impulsion de deuxième type présentant une deuxième durée,
le procédé étant tel que le signal de préambule et le signal de données sont modulés à la même fréquence et le procédé étant tel que le signal de données est séparé du signal de préambule par une période (DEL1) sans signal ayant une durée supérieure à deux fois la durée maximale séparant deux impulsions successives du deuxième type.

2. Procédé de communication selon la revendication 1, **caractérisé en ce que** la période sans signal a une durée supérieure à 2,4 fois la durée maximale séparant deux impulsions du deuxième type.

3. Procédé de communication selon la revendication 1 ou 2, **caractérisé en ce que** le récepteur d'ordres de commande inclut un premier circuit (25) de réception, de traitement du signal de préambule et de réveil, dès réception d'un signal de préambule, d'un deuxième circuit (26) pour recevoir et traiter le signal de données et **en ce que** la période sans signal a, en outre, une durée supérieure à deux fois la durée de traitement du signal de préambule jusqu'au réveil du deuxième circuit.

4. Procédé de communication selon la revendication 3, **caractérisé en ce que** la période sans signal a une durée supérieure à 2,4 fois la durée de traitement du signal de préambule jusqu'au réveil du deuxième circuit.

5. Procédé de communication selon l'une des revendications précédentes, **caractérisé en ce que** le signal de préambule est court et formé par deux impulsions ou est long et formé par une dizaine d'impulsions.

6. Emetteur (40) d'ordres de commande d'un produit motorisé (20) de fermeture, d'occultation ou de protection solaire dans un bâtiment, **caractérisé en ce qu'**il comprend des moyens matériels (100) et logiciels de mise en oeuvre du procédé de communication selon l'une des revendications précédentes.

7. Installation domotique (1) comprenant un émetteur d'ordres de commande selon la revendication 6 et au moins un récepteur (21) d'ordres de commande.

8. Installation domotique selon la revendication 7, **caractérisée en ce qu'**au moins un récepteur (21) d'ordres de commande est associé à un produit (20) domotique motorisé et autonome.

9. Installation domotique selon la revendication 7 ou 8, **caractérisée en ce qu'**elle comprend également au moins un produit (10) domotique motorisé non-autonome, associé à un récepteur (11) d'ordres de commande infrarouge simple, normalement commandé par une trame de communication sans préambule, le produit domotique motorisé non-autonome étant également commandable par l'émetteur d'ordres de commande.

10. Installation domotique selon l'une des revendications 7 à 9, **caractérisée en ce qu'**elle comprend une télécommande universelle (IRUC) comprenant un moyen d'apprentissage (200, 201) d'une trame de communication émise par l'émetteur d'ordres de commande et un moyen d'émission (202) de rayons infrarouges permettant de restituer un signal comprenant cette trame de communication.

## Claims

1. A method for communicating information by infrared radiation between a control command transmitter (40) for a motorized product (20) for closure, privacy or solar protection in a building and a control command receiver (21; 11), comprising the transmission of a communication frame including:
- a preamble signal (HDR) consisting of the repetition of pulses of a first type, a pulse of a first type having a first duration, and
- a data signal (DAT), the data being translated into the form of pulses of a second type, a pulse of a second type having a second duration,
wherein the preamble signal and the data signal are modulated at the same frequency and wherein the data signal is separated from the preamble signal by a signal-free period (DEL1) which duration is greater than twice the maximum duration separating two successive pulses of the second type.

2. The communication method as claimed in claim 1, wherein the signal-free period has a duration greater than 2.4 times the maximum duration separating two pulses of the second type.

3. The communication method as claimed in claim 1 or 2, wherein the control command receiver includes a first circuit (25) for reception, processing the preamble signal and waking up, upon reception of a preamble signal, a second circuit (26) for receiving and processing the data signal and wherein the signal-free period has, furthermore, a duration of greater than twice the duration of processing of the preamble signal up to the waking of the second circuit.

4. The communication method as claimed in claim 3, wherein the signal-free period has a duration of greater than 2.4 times the duration of processing of the preamble signal up to the waking of the second circuit.

5. The communication method according to one of preceding claim, wherein the preamble signal is short and formed by two pulses or is long and formed by about ten pulses.

6. A control command transmitter (40) for a motorized product (20) for closure, privacy or solar protection in a building, which comprises hardware means (100) and software for implementing the communication method as claimed in one of the preceding claims.

7. A home-automation installation (1) comprising a control command transmitter as claimed in claim 6 and at least one control command receiver (21).

8. The home-automation installation as claimed in claim 7, wherein at least one control command receiver (21) is associated with a motorized and self-powered home-automation product (20).

9. The home-automation installation as claimed in claim 7 or 8, which also comprises at least one externally-powered motorized home-automation product (10), associated with a simple-infrared-control command receiver (11), normally controlled by a preamble-free communication frame, the externally-powered motorized home-automation product being also controllable by the control command transmitter.

10. The home-automation installation as claimed in one of claims 7 to 9, which comprises a universal remote control (IRUC) comprising a means (200, 201) for learning a communication frame transmitted by the control command transmitter and a means (202) for transmitting infrared rays making it possible to retrieve a signal comprising this communication frame.

## Patentansprüche

1. Verfahren zur Kommunikation von Informationen mittels Infrarotstrahlung zwischen einem Sender (40) von Steuerbefehlen eines motorisierten Produkts (20) zum Schließen, Abdunkeln oder für den Sonnenschutz in einem Gebäude, und einem Empfänger (21; 11) von Steuerbefehlen, das das Senden eines Kommunikationsrahmens enthält, der Folgendes umfasst:
- ein Präambelsignal (HDR), das aus der Wiederholung von Impulsen eines ersten Typs besteht, wobei ein Impuls eines ersten Typs eine erste Dauer aufweist, und
- ein Datensignal (DAT), wobei die Daten in Form von Impulsen eines zweiten Typs ausgedrückt werden, wobei ein Impuls eines zweiten Typs eine zweite Dauer aufweist,
wobei das Verfahren so ist, dass das Präambelsignal und das Datensignal mit der gleichen Frequenz moduliert werden, und das Verfahren so ist, dass das Datensignal vom Präambelsignal durch eine signallose Periode (DEL1) getrennt ist, die eine größere Dauer als die doppelte maximale Dauer hat, die zwei aufeinanderfolgende Impulse des zweiten Typs trennt.

2. Kommunikationsverfahren nach Anspruch 1, **dadurch gekennzeichnet, dass** die signallose Periode eine Dauer hat, die größer ist als 2, 4 Mal die maximale Dauer, die zwei Impulse des zweiten Typs trennt.

3. Kommunikationsverfahren nach Anspruch 1 oder 2, **dadurch gekennzeichnet, dass** der Empfänger von Steuerbefehlen eine erste Schaltung (25) zum Empfang, zur Verarbeitung des Präambelsignals und zum Einschalten, bei Empfang eines Präambelsignals, einer zweiten Schaltung (26) umfasst, um das Datensignal zu empfangen und zu verarbeiten, und dass die signallose Periode außerdem eine Dauer größer als die doppelte Verarbeitungsdauer des Präambelsignals bis zum Einschalten der zweiten Schaltung hat.

4. Kommunikationsverfahren nach Anspruch 3, **dadurch gekennzeichnet, dass** die signallose Periode eine Dauer größer als 2,4 Mal die Verarbeitungsdauer des Präambelsignals bis zum Einschalten der zweiten Schaltung hat.

5. Kommunikationsverfahren nach einem der vorhergehenden Ansprüche, **dadurch gekennzeichnet, dass** das Präambelsignal kurz ist und von zwei Impulsen geformt wird, oder lang ist und von etwa zehn Impulsen geformt wird.

6. Sender (40) von Steuerbefehlen eines motorisierten Produkts (20) zum Schließen, Verdunkeln oder für den Sonnenschutz in einem Gebäude, **dadurch gekennzeichnet, dass** er Hardware- (100) und Softwareeinrichtungen zur Durchführung des Verfahrens nach einem der vorhergehenden Ansprüche enthält.

7. Domotikanlage (1), die einen Sender von Steuerbefehlen nach Anspruch 6 und mindestens einen Empfänger (21) von Steuerbefehlen enthält.

8. Domotikanlage nach Anspruch 7, **dadurch gekennzeichnet, dass** mindestens ein Empfänger (21) von Steuerbefehlen einem motorisierten und autonomen Domotik-Produkt (20) zugeordnet ist.

9. Domotikanlage nach Anspruch 7 oder 8, **dadurch gekennzeichnet, dass** sie ebenfalls mindestens ein motorisiertes, nicht autonomes Domotik-Produkt (10) enthält, das einem einfachen Empfänger (11) von Infrarot-Steuerbefehlen zugeordnet ist, der normalerweise von einem Kommunikationsrahmen ohne Präambel gesteuert wird, wobei das motorisierte, nicht autonome Domotik-Produkt ebenfalls vom Sender von Steuerbefehlen gesteuert werden kann.

10. Domotikanlage nach einem der Ansprüche 7 bis 9, **dadurch gekennzeichnet, dass** sie eine Universal-Fernsteuerung (IRUC) enthält, die eine Lerneinrichtung (200, 201) eines vom Steuerbefehlsender gesendeten Kommunikationsrahmens und eine Sendeeinrichtung (202) von Infrarotstrahlen enthält, die es ermöglichen, ein Signal wiederherzustellen, das diesen Kommunikationsrahmen enthält.
